# EUROPEAN PATENT APPLICATION

(11) **EP 1 863 278 A2**
(43) Date of publication of application: **05.12.2007**
(21) Application number: 07290046.7
(22) Date of filing: 11.01.2007
(51) Int. Cl.: H04N 5/76

(54) **Reproduction control device and method for image display apparatus**

(30) Priority: 29.05.2006 KR 20060048362
(71) Applicant: LG Electronics Inc., Yongdungpo-gu Seoul (KR)
(72) Inventor: Hyun, Soo Jin, Dong-gu Busan-si (KR)
(74) Representative: Cabinet Plasseraud

(57) **Abstract**

In an image display apparatus, having a recording function, even when a channel change command is input from a user during a time shift function being performed for a predetermined channel, the time shift function can be continuously performed for the predetermined channel while a program on a channel corresponding to the channel change command is being displayed. That is, while a time shift function continues for a current channel, a program on another channel can be displayed.

## Description

### BACKGROUND OF THE INVENTION

### Field of the Invention

The present invention relates to an image display apparatus, and more particularly, to a reproduction control device and method for an image display apparatus that are designed to display a program aired on a channel changed according to a channel change command while continuing a time shift function for a previous channel.

### Description of the Related Art

Recently, image display apparatuses and broadcast signal transmission methods have been largely advanced, and as a result, a digital television receiving broadcast signals transmitted by a digital transmission method has been developed and draws public attention.

When a user watches a broadcast using a digital television, the user can record a broadcast image in real time using a personal video recorder (PVR) of the digital television for future playback.

This recording function allows a user to store a desired program. Furthermore, when a conference is conducted using a digital television, the conference can be recorded using the recording function.

Generally, a PVR system can be called as a personal digital recorder having a hard disk for recording and reproducing data. As compared with a video cassette recorder (VCR) having a magnetic tape for recording an image signal, the PVR system is a new era digital recorder having a hard disk for recording and reproducing data.

That is, broadcast programs can be recorded using a hard disk installed in a set top box or television without using an additional VCR.

Furthermore, according to recent time shifting technology, a user can store a transport (TP) stream received from a broadcast channel on a hard disk of a PVR system in real time and reproduce the TP stream in real time. Therefore, a live broadcast program can be watched in reverse display mode or fast forward mode.

A time shifting method for an image display apparatus according to a related art will now be described with reference to the accompanying drawing.

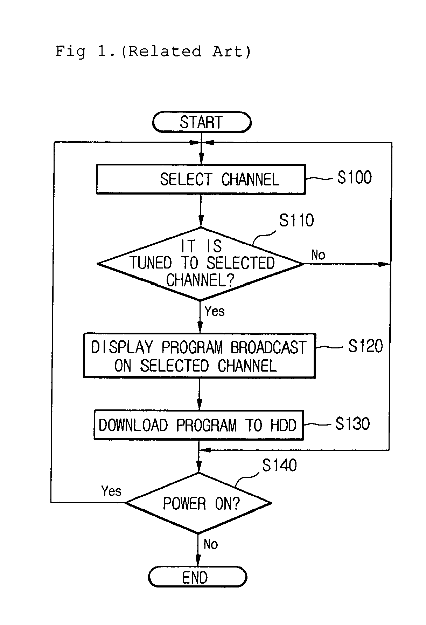

FIG. 1 is a flowchart for explaining a time shifting method used for an image display apparatus according to the related art.

Referring to FIG. 1, the time shifting method starts with operation S100. In operation S100, it is determined whether a broadcast channel is selected.

If a broadcast channel is selected, it is determined whether a tuning action is successively performed for the selected broadcast channel in operation S110.

If the tuning action is successively performed for the selected broadcast channel, a broadcast program received from the selected broad channel is displayed in operation S120.

Meanwhile, if the tuning action is not successively performed for the selected broadcast channel, it is determined whether the image display apparatus is powered on in operation 140.

If the image display apparatus is not powered on, the procedure ends. If the image display apparatus is powered on, the procedure goes back to operation S100.

Meanwhile, when the broadcast program received from the selected channel is displayed in operation S120, the broadcast program is also stored on a hard disk driver (HDD) in operation 130. Then, in operation 140, it is determined whether the image display apparatus is powered on. If so, the procedure goes back to operation 100. If not, the procedure ends.

However, the time shifting method of the related art can only be used for a broadcast program of a selected broadcast channel. That is, the time shifting method of the related art cannot be used for a program aired on a non-selected broadcast channel.

Even when a user wants to simultaneously watch two or more programs broadcast on different channels (for example, a husband wants to watch a news program, and a wife wants to watch a drama), the user can watch only one program or two or more programs in turns.

That is, although a user can watch two or more programs in turns, the user cannot watch two or more programs at the same time.

To address this problem, a selected program can be recorded while a user watches another program. However, in this case, it takes an additional time for the user to watch the recorded program.

Alternatively, a picture-in-picture (PIP) function can be used. However, it is inconvenient for a user to see main and sub windows at the same time.

### SUMMARY OF THE INVENTION

Accordingly, the present invention is directed to a reproduction control device and method for an image display apparatus that substantially obviates one or more problems due to limitations and disadvantages of the related art.

An object of the present invention is to provide a reproduction control device and method for an image display apparatus that are designed to continue a time shift function for a current channel when a channel change command is input from a user.

Another object of the present invention is to provide a reproduction control device and method for an image display apparatus that are designed to store a program aired on a current channel and simultaneously display a program aired on another channel.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a reproduction control device for an image display apparatus, the reproduction control device including: first and second tuners selecting different channels; a key receiver receiving a user's command including a time shift function condition for each channel and a channel change command; a storage storing a broadcast signal received using one of the first and second tuners based on the user's command; and a controller controlling the first and second tuners and the storage based on the user's command, wherein when a time shift function is preset for a current channel and a channel change command is input through the key receiver, the controller controls the storage to store a broadcast signal received from the current channel using one of the first and second tuners and controls the other of the first and second tuners to select a channel corresponding to the channel change command.

The time shit function condition includes whether a time shift function continues for a current channel and a time shift continuation condition.

One of the first and second tuners is continuously tuned to the current channel under control of the controller.

The other of the first and second tuners is tuned to a channel corresponding to the channel change command under control of the controller.

When a time shift function is not necessary to continue for a current channel and a channel change command is input through the key receiver, the controller controls the other of the first and second tuners to be tuned to the channel corresponding to the channel change command.

The controller controls the storage to store a broadcast signal received from the channel corresponding to the channel change command depending on a condition of one of the first and second tuners.

The controller controls the storage to store a broadcast signal received from the channel corresponding to the channel change command when one of the first and second tuners is not used for performing a time shift function for a predetermined channel.

In another aspect of the present invention, there is provided a reproduction control device for an image display apparatus, the reproduction control device including: first and second tuners selecting different channels; a storage storing a broadcast signal received using one of the first and second tuners; a key receiver receiving a user's command including a time shift function condition for each channel and a channel change command; a controller controlling the first and second tuners and the storage based on the user's command; a display unit displaying a broadcast signal received using the second tuner under control of the controller, wherein when a channel change command is input through the key receiver, the controller controls the storage to store a broadcast signal received from the current channel using the first tuner depending on a time shift function condition of the current channel and controls the second tuner to select a channel corresponding to the channel change command.

When a time shift function is not necessary to continue for the current channel, the controller controls the display unit to display a broadcast signal received using the second tuner and controls the storage to store the broadcast signal received using the second tuner depending on whether the first tuner is used for performing a time shift function for another channel.

In a further another aspect of the present invention, there is provided a reproduction control method for an image display apparatus having first and second tuners and a storage, the reproduction control method including: receiving a time shift function condition for each channel from a user; when a channel change command is received from a user, detecting a time shift function condition of a current channel; and storing a broadcast signal received from the current channel and tuning to a channel corresponding to the channel change command.

The receiving of the time shift function condition includes receiving a user's command regarding whether a time shift function continues for a channel selected by the user and a time shift continuation condition.

The detecting of the time shift function condition includes determining whether a time shift function is to be continued for the current channel.

The storing of the broadcast signal and the tuning to the channel include controlling one of the first and second tuners to be continuously tuned to the current channel when a time shift continuation function is set for the current channel.

The storing of the broadcast signal and the tuning to the channel include tuning to the channel corresponding to the channel change command using one of the first and second tuners that is not used for continuously tuning to the current channel.

The tuning to the channel includes: displaying a broadcast signal received from the channel corresponding to the channel change command; determining whether a time shift function is to be continued for the current channel using one of the first and second tuners; and if not, storing the broadcast signal received from the channel corresponding to the channel change command.

In a still further another aspect of the present invention, there is provided a reproduction control method for an image display apparatus having first and second tuners and a storage, the reproduction control method including: receiving a time shift function condition for each channel from a user; selecting a channel based on a user's command and performing a time shift function for a current channel; when a channel change command is received from a user during the time shift function being performed, determining whether the time shift function is to be continued for the current channel; and continuing the time shift function for the current channel depending on the determination result and tuning to a channel corresponding to the channel change command.

The determining include: displaying an on-screen display (OSD) menu so as to ask a user whether the time shift function is to be continued for the current channel; and receiving a user's command using the on-screen menu.

In a yet further another aspect of the present invention, there is provided a reproduction control method for an image display apparatus having first and second tuners and a storage, the reproduction control method including: receiving a time shift function condition for each channel from a user; when a current channel is selected, tuning to the current channel using the first tuner and performing a time shift function to store a broadcast signal received from the current channel into the storage; when a channel change command is received from a user during the time shift function being performed, determining whether the time shift function is necessary to be continued for the current channel; and if the time shift function is necessary to be continued for the current channel, continuously storing the broadcast signal received from the current channel, and simultaneously, tuning to a channel corresponding to the channel change command using the second tuner.

If the time shift function is not necessary to be continued for the current channel, the reproduction control method further includes: tuning to a corresponding channel to the channel change command using the second tuner; displaying a broadcast signal received from the corresponding channel; while displaying the broadcast signal received from the corresponding channel, determining whether a time shift function is performed using the first tuner for a preset channel; and if a time shift function is not performed using the first tuner for a preset channel, storing the broadcast signal received from the corresponding signal.

If a time shift function is performed using the first tuner for a preset channel, the reproduction control method further includes determining whether a channel change command is input from a user.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a flowchart for explaining a time shifting method used for an image display apparatus according to the related art;

FIG. 2 is a schematic block diagram illustrating a reproduction control device of an image display apparatus according to an embodiment of the present invention;

FIG. 3 is a flowchart for explaining a reproduction control method for an image display apparatus according to an embodiment of the present invention; and

FIG. 4 is a flowchart for explaining a reproduction control method for an image display apparatus according to another embodiment of the present invention.

### DETAILED DESCRIPTION OF THE INVENTION

A reproduction control device and method for an image display apparatus will now be described in detail with reference to the accompanying drawings, in which exemplary embodiments of the invention are shown.

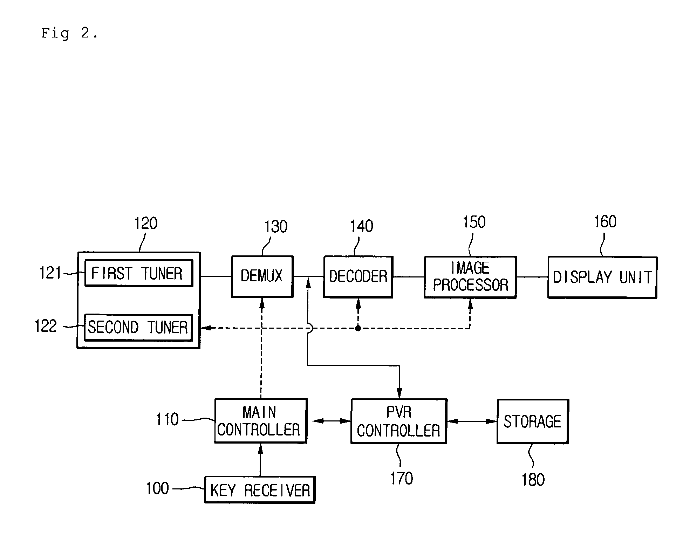

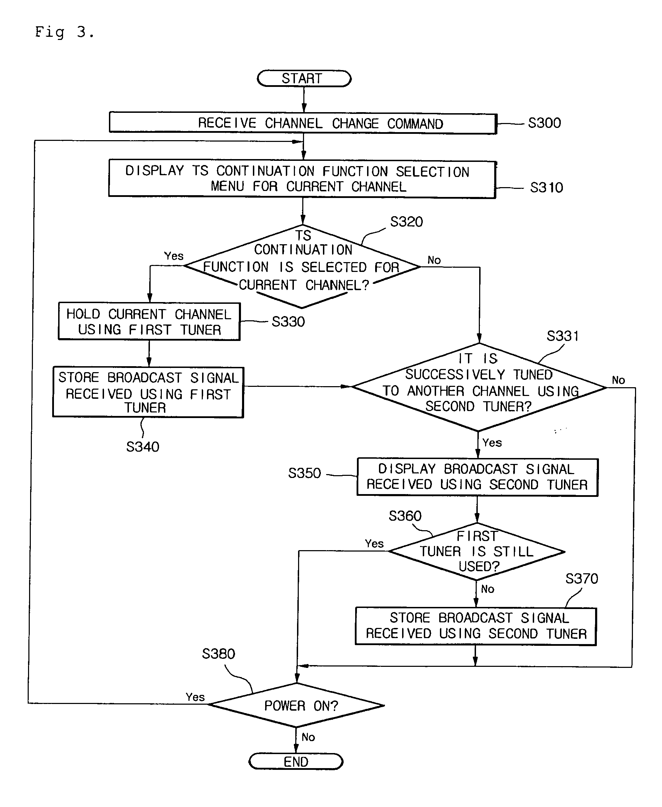

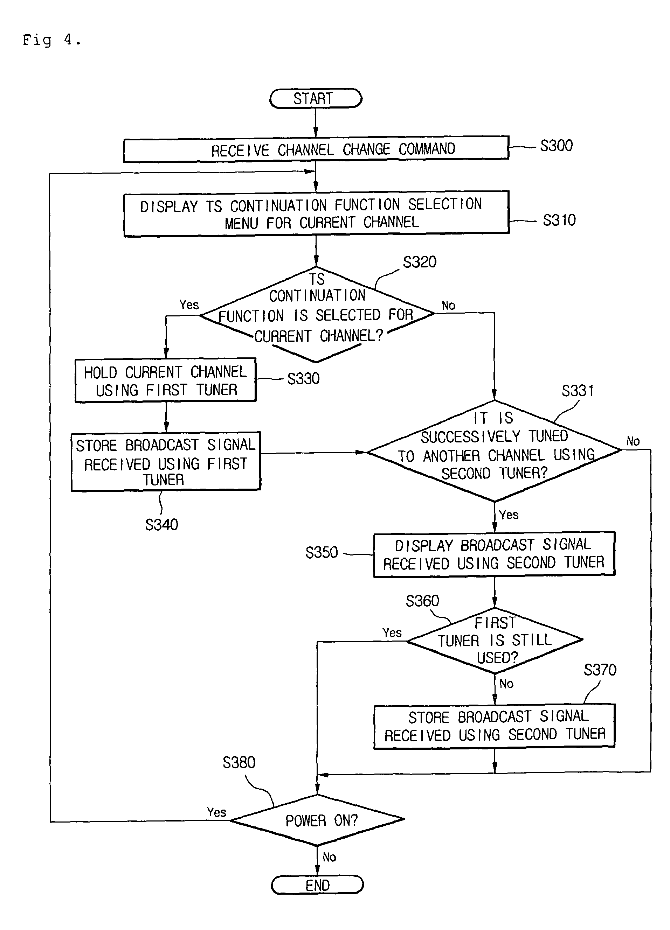

FIG. 2 is a schematic block diagram illustrating a reproduction control device of an image display apparatus according to an embodiment of the present invention, FIG. 3 is a flowchart for explaining a reproduction control method for an image display apparatus according to an embodiment of the present invention, and FIG. 4 is a flowchart for explaining a reproduction control method for an image display apparatus according to another embodiment of the present invention.

Referring to FIG. 2, according to an embodiment of the present invention, the reproduction control device includes a key receiver such as an infrared (IR) receiver 100, a main controller 110, a tuner 120, a demultiplexer (DEMUX) 130, an MPEG decoder 140, an image processor 150, a display unit 160, a personal video recorder (PVR) controller 170, and a storage 180. For example, the tuner 120 can include first and second tuners 121 and 122.

The key receiver 100 receives a user's command from a remote control (not shown) or a local key and sends the user's command to the main controller 110. The main controller 110 controls the tuner 120, the demultiplexer 130, the MPEG decoder 140, and the PVR controller 170 according to the user's command.

The main controller 110 interprets the user's command. When the user's command is a channel change command, the main controller 110 sends the channel change command to the tuner 120.

The channel change command can be sent to the tuner 120 when a time shift (TS) function is used for a current program received through the first tuner 121 of the tuner 120. In this case, the current program is continuously received using the first tuner 121 and stored in the storage 180.

Instead, the second tuner 122 of the tuner 120 selects a channel corresponding to the channel change command under control of the main controller 110. Then, a broadcast signal from the selected channel is transmitted to the demultiplexer 130. The demultiplexer 130 demultiplexes the broadcast signal into an image signal, a voice signal, and an additional information signal. These signals are displayed on the display unit 160 after processed by the MPEG decoder 140 and the image processor 150.

In the current embodiment, the tuner 120 includes the first and second tuners 121 and 122. However, the tuner 120 can include more tuners.

The demultiplexer 130 is used to demultiplex a transport (TP) stream (broadcast signal) received through the tuner 120 into an MPEG audio signal, a video signal, and an additional information signal.

The MPEG decoder 140 receives signals from the demultiplexer 130 and the storage 180 and decodes audio and video signals of the received signals. Then, the MPEG decoder 140 sends the signals to the image processor 150.

The image processor 150 processes an audio signal of the signals received from the MPEG decoder 140 and sends the signals to the display unit 160. Then, the display unit 160 displays the signals.

Under control of the main controller 110, the PVR controller 170 stores the video and audio signals separated from the TP stream by the demultiplexer 130 into the storage 180. Furthermore, the PVR controller 170 reads video/audio signals from the storage 180.

A reproduction control method for an image display apparatus will now be described with reference to FIG. 3 according to an embodiment of the present invention. In operation S200, it is determined whether a time shift function is continued for a current channel or desired channel, and time shift continuation conditions are set.

In other words, it is determined whether a time shift function is continued for a current channel or desired channel, and corresponding time shift continuation options such as a frequency (e.g., once, daily, weekly, or weekend) are selected. For example, when it is desired to watch a 9 o'clock daily news program, it may be set to perform a time shift function everyday at 9 o'clock.

Hereinafter, a tuner used for selecting the current channel will be denoted as a first tuner 121, and another toner will be denoted as a second tuner 122.

In operation S210, another channel is selected while the time shift continuation function is set for the current channel. Then, it is determined whether a time shift continuation function is set for the current channel in operation S220.

If a time shift continuation function is set for the current channel, the current channel is held using the first tuner 121 in operation 230. Next, in operation 240, a broadcast signal received from the current channel using the first tuner 121 is continuously stored in to the storage 180.

Meanwhile, if a time shift continuation function is not set for the current channel, the procedure goes to operation 231. In operation S231, it is determined whether it is successively tuned to the channel selected in operation S210 using the second tuner 122.

If it is successively tuned to the channel using the second tuner 122, a broadcast signal received using the second tuner 122 is displayed in operation S250.

While displaying the broadcast signal received using the second tuner 122, it is determined whether the first tuner 121 is still used for the time shift continuation function in operation S260.

If the first tuner 121 is still used for the time shift continuation function, the procedure goes to operation 280 where it is determined whether the image display apparatus is turned on or off. If the image display apparatus is turned on, the procedure goes back to operation S210.

If the first tuner 121 is not used for the time shift continuation function, the broadcast signal received using the second tuner 122 is stored in the storage 180 in operation S270.

While storing the broadcast signal received using the second tuner 122 into the storage 180, it is determined whether the image display apparatus is turned on or off in operation S280. If the image display apparatus is turned on, the procedure goes back to operation S210 as described above. If the image display apparatus is turned off, the procedure ends.

As explained above, a time shift continuation function can be preset for a predetermined channel so as to perform a time shift function for the predetermined channel even when another channel is selected. That is, a user can watch a program on one channel while a time shift function is performed for a different program aired on another channel.

A reproduction control method for an image display apparatus will now be described with reference to FIG. 4 according to another embodiment of the present invention.

Referring to FIG. 4, when a user input a channel change command, a menu is displayed on a screen so as to allow the user to select whether a time shift continuation function will be set for a current channel (S300 and S310).

Here, the menu can be displayed in various manners. For example, the menu can be an on-screen display (OSD) menu including a time menu and a frequency menu (e.g., once, daily, weekly, or weekend).

After the user manipulates the menu, it is determined whether a time shift continuation function is set for the current channel in operation 320.

If a time shift continuation function is set for the current channel, the current channel is held using the first tuner 121 in operation 230. Next, in operation 240, a broadcast signal received from the current channel using the first tuner 121 is stored in to the storage 180.

The other operations of the current embodiment are the same as in the embodiment illustrated in FIG. 3. Thus, descriptions of the other operations will be omitted.

As described above, according to the reproduction control device and method for an image display apparatus, a time shift function can be continued for a program aired on one channel while a different program of another different channel is displayed on the image display apparatus.

Furthermore, according to the present invention, a broadcast signal can be stored or displayed in various manners depending on a user's selection. Therefore, a user can watch a broadcast program in a desired way and more conveniently.

It will be apparent to those skilled in the art that various modifications and variations can be made in the present invention. Thus, it is intended that the present invention covers the modifications and variations of this invention provided they come within the scope of the appended claims and their equivalents.

## Claims

1. A reproduction control device for an image display apparatus, the reproduction control device comprising:
first and second tuners selecting different channels;
a key receiver receiving a user's command including a time shift function condition for each channel and a channel change command;
a storage storing a broadcast signal received using one of the first and second tuners based on the user's command; and
a controller controlling the first and second tuners and the storage based on the user's command,
wherein when a time shift function is preset for a current channel and a channel change command is input through the key receiver, the controller controls the storage to store a broadcast signal received from the current channel using one of the first and second tuners and controls the other of the first and second tuners to select a channel corresponding to the channel change command.

2. The reproduction control device according to claim 1, wherein the time shit function condition comprise whether a time shift function continues for a current channel and a time shift continuation condition.

3. The reproduction control device according to claim 2, wherein the time shift continuation condition is selected from the group consisting of date, continuation period, channel, program, and combinations thereof and is set depending on a user's command.

4. The reproduction control device according to claim 1, wherein one of the first and second tuners is continuously tuned to the current channel under control of the controller, and the other of the first and second tuners is tuned to a channel corresponding to the channel change command under control of the controller.

5. The reproduction control device according to claim 1, wherein when a time shift function is not necessary to continue for a current channel and a channel change command is input through the key receiver, the controller controls the other of the first and second tuners to be tuned to the channel corresponding to the channel change command.

6. The reproduction control device according to claim 5, wherein the controller controls the storage to store a broadcast signal received from the channel corresponding to the channel change command depending on a condition of one of the first and second tuners.

7. The reproduction control device according to claim 6, wherein the controller controls the storage to store a broadcast signal received from the channel corresponding to the channel change command when one of the first and second tuners is not used for performing a time shift function for a predetermined channel.

8. A reproduction control device for an image display apparatus, the reproduction control device comprising:
first and second tuners selecting different channels;
a storage storing a broadcast signal received using one of the first and second tuners;
a key receiver receiving a user's command including a time shift function condition for each channel and a channel change command;
a controller controlling the first and second tuners and the storage based on the user's command;
a display unit displaying a broadcast signal received using the second tuner under control of the controller,
wherein when a channel change command is input through the key receiver, the controller controls the storage to store a broadcast signal received from the current channel using the first tuner depending on a time shift function condition of the current channel and controls the second tuner to select a channel corresponding to the channel change command.

9. The reproduction control device according to claim 8, wherein when a time shift function is not necessary to continue for the current channel, the controller controls the display unit to display a broadcast signal received using the second tuner and controls the storage to store the broadcast signal received using the second tuner depending on whether the first tuner is used for performing a time shift function for another channel.

10. A reproduction control method for an image display apparatus having first and second tuners and a storage, the reproduction control method comprising:
receiving a time shift function condition for each channel from a user;
when a channel change command is received from a user, detecting a time shift function condition of a current channel; and
storing a broadcast signal received from the current channel and tuning to a channel corresponding to the channel change command.

11. The reproduction control method according to claim 10, wherein the receiving of the time shift function condition comprises receiving a user's command regarding whether a time shift function continues for a channel selected by the user and a time shift continuation condition.

12. The reproduction control method according to claim 10, wherein the detecting of the time shift function condition comprises determining whether a time shift function is to be continued for the current channel.

13. The reproduction control method according to claim 10, wherein the storing of the broadcast signal and the tuning to the channel comprise controlling one of the first and second tuners to be continuously tuned to the current channel when a time shift continuation function is set for the current channel.

14. The reproduction control method according to claim 10, wherein the storing of the broadcast signal and the tuning to the channel comprise tuning to the channel corresponding to the channel change command using one of the first and second tuners that is not used for continuously tuning to the current channel.

15. The reproduction control method according to claim 14, wherein the tuning to the channel comprises:
displaying a broadcast signal received from the channel corresponding to the channel change command;
determining whether a time shift function is to be continued for the current channel using one of the first and second tuners; and
if not, storing the broadcast signal received from the channel corresponding to the channel change command.

16. A reproduction control method for an image display apparatus having first and second tuners and a storage, the reproduction control method comprising:
receiving a time shift function condition for each channel from a user;
selecting a channel based on a user's command and performing a time shift function for a current channel;
when a channel change command is received from a user during the time shift function being performed, determining whether the time shift function is to be continued for the current channel; and
continuing the time shift function for the current channel depending on the determination result and tuning to a channel corresponding to the channel change command.

17. The reproduction control method according to claim 16, wherein the determining comprises:
displaying an on-screen display (OSD) menu so as to ask a user whether the time shift function is to be continued for the current channel; and
receiving a user's command using the on-screen menu.

18. A reproduction control method for an image display apparatus having first and second tuners and a storage, the reproduction control method comprising:
receiving a time shift function condition for each channel from a user;
when a current channel is selected, tuning to the current channel using the first tuner and performing a time shift function to store a broadcast signal received from the current channel into the storage;
when a channel change command is received from a user during the time shift function being performed, determining whether the time shift function is necessary to be continued for the current channel; and
if the time shift function is necessary to be continued for the current channel, continuously storing the broadcast signal received from the current channel, and simultaneously, tuning to a channel corresponding to the channel change command using the second tuner.

19. The reproduction control method according to claim 18, wherein if the time shift function is not necessary to be continued for the current channel, the reproduction control method further comprising:
tuning to a corresponding channel to the channel change command using the second tuner;
displaying a broadcast signal received from the corresponding channel;
while displaying the broadcast signal received from the corresponding channel, determining whether a time shift function is performed using the first tuner for a preset channel; and
if a time shift function is not performed using the first tuner for a preset channel, storing the broadcast signal received from the corresponding signal.

20. The reproduction control method according to claim 19, wherein if a time shift function is performed using the first tuner for a preset channel, the reproduction control method further comprising determining whether a channel change command is input from a user.
